# EUROPEAN PATENT SPECIFICATION

(11) **EP 0 975 102 B1**
(45) Date of publication and mention of the grant of the patent: **07.04.2004**
(21) Application number: 99202206.1
(22) Date of filing: 06.07.1999
(51) Int. Cl.: H04B 10/08, H04B 10/207

(54) **A passive system to control optical networks with a tree structure**
Passives System zur Steuerung von optischen Netzwerken mit baumartiger Struktur
Un système passif de contrôle de réseaux optiques à structure en arbre

(30) Priority: 23.07.1998 IT MI981703
(43) Date of publication of application: 26.01.2000
(73) Proprietor: SIRTI S.p.A., I-20124 Milano (IT)
(72) Inventor: Cottino, Edoardo, 20050 Besana Brianza Milan (IT); Bottanelli, Mauro, 20134 Milan (IT); Pozzi, Francesco, 21013 Gallarate (Varese) (IT)
(74) Representative: De Gregori, Antonella

(56) References cited:
- WO-A-96/31022
- US-A- 5 680 234

## Description

The present invention refers to a deterioration control system of the fiber optics carrier in optical networks with a tree structure, already defined as "PON" ("Passive Optical Networks") type networks, in international team works and in regulatory committees.

In the field of the access networks, the optical networks with a tree structure are potentially suitable to make available to the user a high frequency band of the transmitted signal, different structures have been defined and different data access procedures have been proposed for said networks.

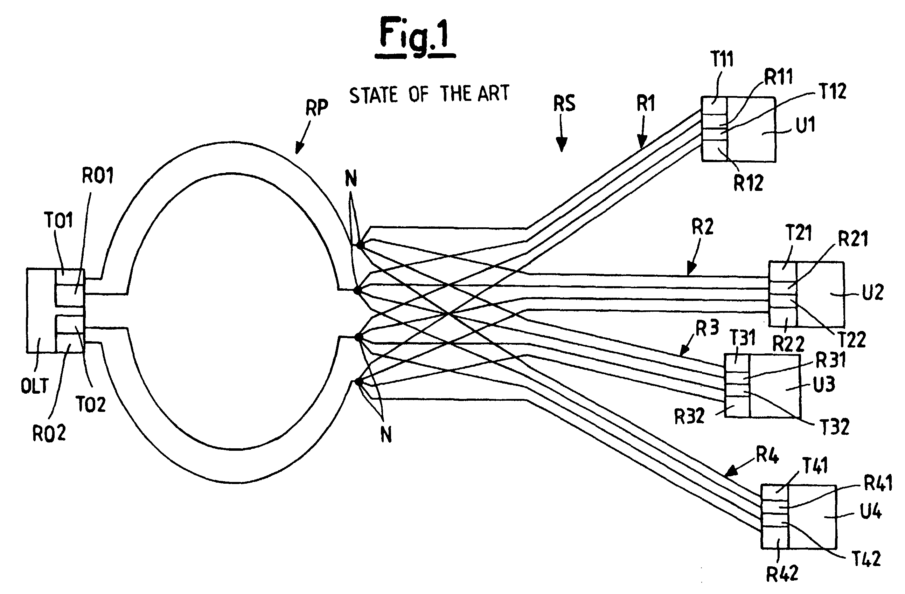

For instance, Figure 1 shows a typical schematic configuration of an access network of the "PON" type, comprising a main terminal and four remote terminals, suitable to serve different users and to provide different types of traffic; said terminals are connected to each other through a two-way protection, both in the main network and in the secondary network.

The data transmitted from the main terminal at the signal wavelength, which can be equal, for instance, to 1.550 nm, are sent simultaneously, through branch elements, to all the user terminals, while the communication in the opposite direction is realised through a multiplexing system of the time division type.

As for the other optical networks, also for the "PON" type networks there is the problem of monitoring the fiber optics carrier, both to detect a possible failure along the connection and to monitor any possible deterioration of the carrier during the system life.

Up to now, different control techniques have been proposed, however, all said techniques are based on the analysis of the back-scattering trace coming from the optical line under examination, which is obtained by means of an optical reflectometer operating in the time domain or "OTDR", which is the acronym for "Optical Time Domain Reflectometer". An example of such prior art can be found in WO 9 631 022.

Said control techniques allow to detect with a high level of precision any deterioration and/or failures of the optical carrier, starting from the evaluation of the intensity of the radiation back-scattered by the carrier due to the Rayleigh effect, and are suitable to implement said working ways according to different approaches, as for instance the observation of reference reflections, the use of processing techniques of the back-scattering signal, the use of branch selectors or the use of multiplexing devices at the same wavelength of the branches.

However, none of the previous approaches solves in a simple and inexpensive way the main problem in monitoring a tree network using a reflectometer technique, i.e. the overlapping of the back-scattering traces from the different branches, which definitely makes unreliable the measure and, therefore, the location of the failure or deterioration.

A purpose of the present invention is to solve the above mentioned disadvantage and in particular to show a control system, for optical network with a tree structure, which is fully passive (i.e. a system which does not use network electronics) and which is further suitable to control all the branches of a "PON" type network through the use of a traditional optical reflectometer with a single wavelength.

A further purpose of the present invention is to disclose a control system, for optical networks with a tree structure, which is particularly simple and inexpensive and which can be realised by using traditional optical and electronic technologies and relatively inexpensive materials.

Said purposes are achieved by a control system, for optical networks with a tree structure, according to claim 1, taken as a reference for brevity sake.

Advantageously, the proposed solution allows to directly control all the branches of a "PON" type network and has the characteristic to use only passive components and an optical reflectometer with a single wavelength.

The control system according to the invention is based on the use of optical reflectometers with a single wavelength emission, positioned in the spectrum window used for the control system, which, in an embodiment non limiting example, can be equal to 1.625 nm.

The tree structure with point-to-multipoint type connections, typical of a "PON" network, is transformed in a point-to-point structure at the wavelength of the control radiation, using a proper optical module, which allows to bypass the network at the branch points and a recycle module of the signal itself, installed at each user terminal.

Further characteristics and advantages of the invention will become more evident from the description of a preferred but not exclusive embodiment of the control system for optical networks with a tree structure according to the present invention, said embodiment is described, as a non limiting explanatory example, in the attached drawings, in which:
- Figure 1 shows, in a schematic way, a typical structure of a "PON" type network;
- Figure 2 shows, in a schematic way, a control system for optical networks of the "PON" type according to the present invention;
- Figure 3 shows, in a schematic way, a preferred but non limiting embodiment of an enlarged detail of Figure 2, said detail is formed by a branch module which can be used in a control system for optical networks of the "PON" type according to the present invention;
- Figure 4 shows, in a schematic way, a further preferred but non limiting embodiment of an enlarged detail of Figure 2, said detail comprises a control signal recycling module which can be used in a control system for optical networks of the "PON" type according to the present invention;
- Figure 5 shows, in a schematic way, the signal and the control radiation of a portion of the "PON" type optical network according to the present invention.

Referring to the above figures, OLT indicates the main terminal of the "PON" optical network; RP indicates a primary portion; RS indicates a secondary portion; N indicates the branch points of the network; R1, R2, R3, R4 indicate four branches suitable to transmit the signal to a series of user terminals U, U1, U2, U3, U4;
TO1, TO2, T11, T12, T21, T22, T31, T32, T41, T42, T1, T2 indicate signal transmission devices; RO1, RO2, R11, R12, R21, R22, R31, R32, R41, R42, R1, R2 indicate signal receiving devices; OTDR indicates an Optical Time Domain Reflectometer; SW indicates an optical selector element; MD indicates a signal branch module; ML indicates a module for recycling the control signal; DM indicates wavelength multiplexing components; TR indicates a termination component of the signal; I indicates an input point of the branch module MD; UD1, UD2, UD3, UD4 indicate a series of output units of the branch module MD; I1, I2, I3, I4 indicate a series of input units of the recycling module ML; UL1, UL2, UL3, UL4 indicate a series of output units of the recycling module ML; while SG and SV indicate, respectively, the signal and control electromagnetic radiation of the "PON" type optical network, wherein the arrows indicate the signal path direction.

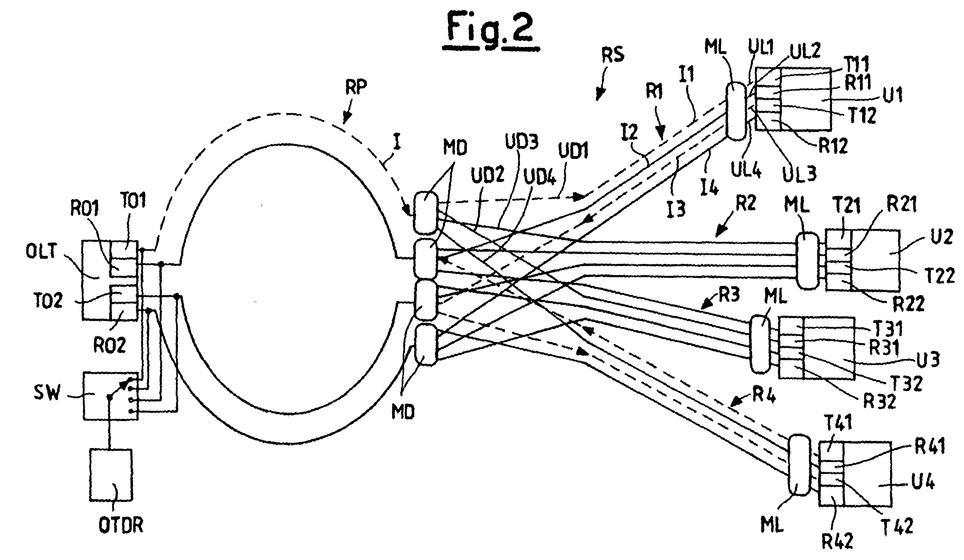

In the example of the preferred but non limiting embodiment shown in the Figures 2-5, the control system according to the invention comprises a branch module MD, which is an integral part of the "PON" network and which allows the two-way connection of the main terminal OLT to each user terminal U, U1-U4, four wavelength multiplexing devices DM, which allow to separate and to gather the wavelengths of the signal SG and of the control SV radiation, according to need, and, in case, a terminal component TR to identify the end of the connection.

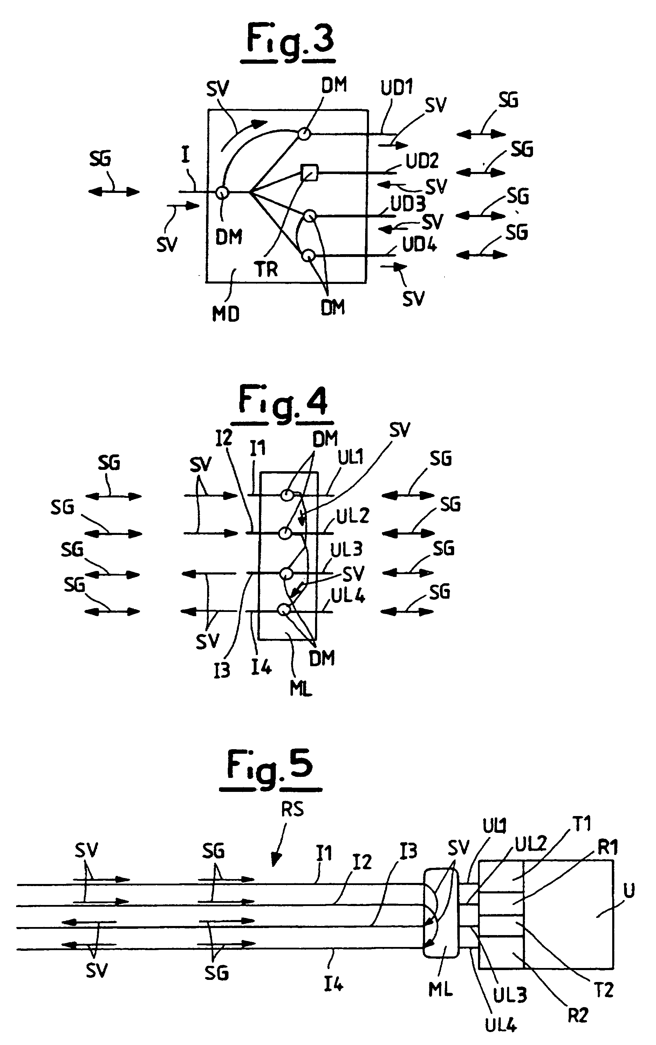

The signal radiation SG and the control radiation SV are separated by a multiplexing device DM positioned at an inlet branch I of the branch module MD, so as that the signal radiation SG passes through the module MD, while the control radiation SV bypasses said module; said radiation are recombined at the output unit UD1 from the module MD, as shown in Figures 2 and 3.

Further, the control radiation SV from the output unit UD3 is separated from the paying traffic and is recombined in the opposite direction by the multiplexing device DM positioned at the output unit UD4 of the branch R4 of the network; since all the components are of the two-way type, it could happen that the control radiation SV comes from the output unit UD4 and is directed to the output unit UD3.

Further, at the output unit UD2 a termination component TR, having the purpose to eliminate the residual control radiation SV and/or to detect the fiber end, as shown in Figure 3.

In the non limiting explanatory example of an embodiment of Figure 4, each signal recycling module ML, positioned at the various user terminals U1, U2, U3, U4, provides the use of four multiplexing devices DM, connected in such a way that the control radiation SV from the input unit I1 of the corresponding fiber is deviated and directed towards the multiplexing device DM of the input unit I3, in an opposite direction with respect to the direction of the control radiation SV at the input unit I1, while the control radiation SV from the input unit I2 is drawn out and injected on the fiber at the input unit I4. Since we are in the presence of two-way components, the control signal SV can pass through the component in the opposite direction.

The transmission signal radiation SG continues, instead, without problems, its path from or towards the user terminals U, U1-U4.

In Figure 2 it is shown, in dotted line, the path of a control radiation SV in the case that the selection device SW connects the optical reflectometer OTDR to the fiber optics of the input unit I, in the primary network RP, connected to the transmission device TO1.

As described above, the control radiation SV bypasses the branch point N by means of the branch module MD, passes through the secondary network RS along the branch R1 and arrives at the user terminal U1. Said control radiation is then, through the recycling module ML, re-injected into another fiber of the branch R1 of the secondary network RS, in the opposite direction, until it reaches again the branch module MD, which allows the radiation SV to be directed again towards another fiber of the branch R4 of the secondary network RS towards the user terminal U4.

Finally, in Figure 5, it is shown in details the path direction of the signal radiation SG and of the control radiation SV at one of the branches R1-R4 of the secondary network RS.

The characteristics as well as the advantages of the control system, for optical networks with a tree structure according to the present invention, are clear from the above description.

In particular, according to the description, it is possible to observe sequentially the back-scattered trace of the segment of the primary network and of different connections of the secondary network up to the exhaustion of the optical reflectometer dynamics or up to the end of the line realised in the branch module. Through the observation of different physical connections in the primary network, it is possible to acquire, in a substantially passive way, also the back-scattering traces from all the branches of the secondary network, without overlapping in the back-scattered signal.

The optical reflectometer, as a measuring instrument, is placed close to the central side in order to share it with the highest number of users and in order to reach a low impact solution in terms of costs.

The evaluation of the carrier deterioration can be performed in an automatic way by using and/or adjusting the algorithms realised in the reflectometer systems already commercially available.

The impact on the network due to the presence of the monitoring system is low, with respect to the known techniques, both from an installation point of view and with respect to the penalties caused to the paying traffic in terms of attenuation.

The proper definition of the specifications of the components, which form the control system according to the invention, avoids also possible impacts on the optical system performances linked to interference and/or non linear phenomena.

The implemented solution is flexible and potentially suitable to different network structures, also in function of specific requirements by the telecommunication operator with respect to the priority of some connections versus other ones.

Finally, said automatic control technique, obtained through the use of fully passive components and of single wavelength measuring instruments in the network, allows to monitor the branches of a "PON" type network, without trace overlapping, through the reduction of a network structure of the point-to-multipoint type to a network structure of the point-to-point type at the control wavelength.

It is clear that the expert in the field can make several changes to the control system according to the present invention as defined by the appended claims, without leaving the protection boundaries of the inventive idea, it is clear as well that, in the embodiments of the invention, the shapes of the shown details can be different and that said details can be substituted by technically equivalent elements.

## Claims

1. A control system for optical network with a tree structure with point-to-multipoint type connections, with predefined configuration and procedures of data access, said system being of the type which comprises at least a main terminal (OLT) and at least one remote user terminal (U, U1-U4), said systems being based on the use of an optical measuring instrument (OTDR), suitable to detect the location of possible deterioration and/or failures along the network connections during the system life, said system providing also the use of at least a branch module (MD) of the signal, positioned close to at least one of the branch points (N) between the primary portion of the network (RP) and the secondary portion of the network (RS), and of a signal recycle module (ML), positioned at each remote user terminal (U, U1-U4), in such a way that said tree structure with a point-to-multipoint type structure is transformed into a point-to-point type structure at the wavelength of a predefined control radiation (SV), **characterised in that** said branch module (MD) comprises an optical branch device, which is an integral part of said optical network and which allows the two-way connection of said main terminal (OLT) to each remote user terminal (U, U1-U4), said branch device comprises a plurality of wavelength multiplexing devices (DM), which allow to separate and to gather the wavelength values of a signal radiation (SG) and of said control radiation (SV) and said wavelength multiplexing device (DM) separates said signal radiation (SG) from said control radiation (SV), in such a way that the signal radiation (SG) passes through said branch module (MD), while the control radiation (SV) bypasses said module; said signal radiation (SG) and control radiation (SV) are recombined at a first output unit (UD1) of said branch module (MD).

2. A system as claimed in claim 1, **characterised in that** said measuring instrument (OTDR) comprises an optical reflectometer with a single wavelength emission, wherein said wavelength value is comprised within a spectrum window used for the transmission of said control radiation (SV).

3. A system as claimed in claim 1, **characterised in that** said branch module (MD) can comprise at least a termination component (TR)which has the purpose of eliminating the residual control radiation (SV) and/or to identify the end of the connection.

4. A system as claimed in claim 1, **characterised in that** said control radiation (SV), coming from a second output unit (UD3) of said branch module (MD), is separated from said signal radiation (SG) and is recombined in the opposite direction by said multiplexing device (DM) positioned close to a third output unit (UD4) of said branch module (MD).

5. A system as claimed in claim 1, **characterised in that** said recycling module (ML) comprises a plurality of wavelength multiplexing devices (DM), connected in such a way that said control radiation (SV), coming from a first input unit (I1) of said recycling module (ML), is deviated and directed, in the opposite direction, towards a second input unit (I3), while said control radiation (SV), coming from a third input unit (I2) of the recycling module (ML), is drawn out and injected, in the opposite direction, at a fourth input unit (I4).

6. A system as claimed in claim 5, **characterised in that** a transmission signal radiation (SG) is not influenced by said recycling module (ML) and continues, undisturbed, its path from or towards said remote terminals (U, U1-U4).

7. A system as claimed in claims 1 and 2, **characterised in that** said reflectometer (OTDR) is linked to a selection device (SW), which connects said reflectometer to one of the optical fibers of the primary network (RP), said optical fiber is connected to a transmission device (TO1) of said main terminal (OLT).

8. A system as claimed in claims 1 or 2, **characterised in that** said control is realised using fully passive network components.

## Patentansprüche

1. Steuersystem für ein optisches Netzwerk mit einer Baumstruktur mit Verbindungen des Punkt-zu-Multipunkt-Typs, mit vordefinierter Datenzugriffskonfiguration und vordefinierten Datenzugriffsverfahren, wobei das System von dem Typ ist, welches wenigstens ein Haupt-Endgerät (OLT) und wenigstens ein entferntes Benutzer-Endgerät (U, U1-U4) umfasst, wobei das System auf der Verwendung eines optischen Messinstruments (OTDR) basiert, das geeignet ist, die Stelle einer möglichen Verschlechterung und/oder möglicher Ausfälle entlang der Netzwerkverbindungen während der Lebensdauer des Systems zu erfassen, wobei das System auch die Verwendung wenigstens eines Verzweigungsmoduls (MD) für das Signal bereitstellt, das nahe wenigstens einem der Verzweigungspunkte (N) zwischen dem primären Abschnitt des Netzwerks (RP) und dem sekundären Abschnitt des Netzwerks (RS) angeordnet ist, und wenigstens eines Signalrezyklierungs-Moduls (ML), das bei jedem entfernten Benutzer-Endgerät (U, U1-U4) angeordnet ist, derart, dass die Baumstruktur mit einer Struktur des Punkt-zu-Multipunkt Typs bei der Wellenlänge einer vordefinierten Steuerstrahlung (SV) in eine Struktur des Punkt-zu-Punkt Typs transformiert wird, **dadurch gekennzeichnet, dass**
das Verzweigungsmodul (MD) eine optische Verzweigungseinrichtung umfasst, die ein integraler Bestandteil des optischen Netzwerks ist und die die Zwei-Weg-Verbindung des Haupt-Endgeräts (OLT) mit jedem entferntem Benutzer-Endgerät (U, U1-U4) gestattet, wobei die Verzweigungseinrichtung eine Mehrzahl von Wellenlängen-Multiplexeinrichtungen (DM) umfasst, die es gestattet, die Wellenlängenwerte einer Signalstrahlung (SG) und der Steuerstrahlung (SV) zu separieren und zu sammeln, und wobei die Wellenlängen-Multiplexeinrichtung (DM) die Signalstrahlung (SG) von der Steuerstrahlung (SV) derart trennt, dass die Signalstrahlung (SG) durch das Verzweigungsmodul (MD) hindurchtritt, während die Steuerstrahlung (SV) das Modul umgeht; wobei die Signalstrahlung (SG) und die Steuerstrahlung (SV) bei einer ersten Ausgabeeinheit (UD1) des Verzweigungsmoduls (MD) rekombiniert werden.

2. System nach Anspruch 1, **dadurch gekennzeichnet, dass**
das Messinstrument (OTDR) ein optisches Reflektometer mit einer Ein-Wellenlängenemission umfasst, wobei der Wellenlängenwert innerhalb eines Spektralfensters liegt, das für die Übertragung der Steuerstrahlung (SV) verwendet wird.

3. System nach Anspruch 1, **dadurch gekennzeichnet, dass**
das Verzweigungsmodul (MD) wenigstens eine Abschlusskomponente (TR) umfassen kann, welche den Zweck besitzt, die verbleibende Steuerstrahlung (SV) zu beseitigen und/oder das Verbindungsende zu identifizieren.

4. System nach Anspruch 1, **dadurch gekennzeichnet, dass**
die Steuerstrahlung (SV), welche von einer zweiten Ausgabeeinheit (UD3) des Verzweigungsmoduls (MD) kommt, von der Signalstrahlung (SG) getrennt wird und in der entgegengesetzten Richtung von der Multiplexeinrichtung, die nahe einer dritten Ausgabeeinheit (UD4) des Verzweigungsmoduls (MD) angeordnet ist, rekombiniert wird.

5. System nach Anspruch 1, **dadurch gekennzeichnet, dass**
das Rezyklierungs-Modul (ML) eine Mehrzahl von Wellenlängen-Multiplexeinrichtungen (DM) umfasst, die auf solche Weise verbunden sind, dass die Steuerstrahlung (SV), die von einer ersten Eingabeeinheit (I1) des Rezyklierungs-Moduls (ML) kommt, abgelenkt und in der entgegengesetzten Richtung zu einer zweiten Eingabeeinheit (I3) gelenkt wird, während die Steuerstrahlung (SV), die von einer dritten Eingabeeinheit (I2) des Rezyklierungs-Moduls (ML) kommt, herausgezogen und in der entgegengesetzten Richtung in eine vierte Eingabeeinheit (I4) injiziert wird.

6. System nach Anspruch 5, **dadurch gekennzeichnet, dass**
eine Übertragungssignalstrahlung (SG) von dem Rezyklierungs-Modul (ML) nicht beeinflusst wird und seinen Weg von oder zu den entfernten Endgeräten (U, U1-U4) ungestört fortsetzt.

7. System nach Anspruch 1 oder 2, **dadurch gekennzeichnet, dass**
das Reflektometer (OTDR) mit einer Auswahleinrichtung (SW) gekoppelt ist, welche das Reflektometer mit einer oder mehreren optischen Fasern des primären Netzwerks (RP) verbindet, wobei die optische Faser mit einer Übertragungseinrichtung (TO1) des Haupt-Endgeräts (OLT) verbunden ist.

8. System nach Anspruch 1 oder 2, **dadurch gekennzeichnet, dass**
die Steuerung unter Verwendung vollständig passiver Netzwerkkomponenten realisiert ist.

## Revendications

1. Système de contrôle pour réseau optique à structure en arbre avec des connexions de type point à multipoint, et une configuration et des procédures prédéfinies d'accès aux données, ledit système étant du type qui comprend au moins un terminal principal (OLT) et au moins un terminal d'utilisateur distant (U, U1-U4), ledit système se basant sur l'utilisation d'un instrument de mesure optique (OTDR), adapté pour détecter l'emplacement d'une détérioration et/ou de défaillances possibles le long des connexions du réseau pendant la durée de vie du système, ledit système prévoyant également l'emploi d'au moins un module de branchement (MD) du signal, positionné à proximité d'au moins un des points de branchement (N) entre la partie principale du réseau (RP) et la partie secondaire du réseau (RS), et d'un module de recyclage de signaux (ML) positionné au niveau de chaque terminal d'utilisateur distant (U, U1-U4), de telle manière que ladite structure en arbre avec une structure de type point à multipoint soit transformée en une structure du type point à point à la longueur d'onde d'une radiation de contrôle prédéfinie (SV), **caractérisé en ce que** ledit module de branchement (MD) comprend un dispositif de branchement optique, qui fait partie intégrante dudit réseau optique et qui permet la connexion à deux voies dudit terminal principal (OLT) à chaque terminal d'utilisateur distant (U, U1-U4), ledit dispositif de branchement comprend une pluralité de dispositifs de multiplexage en longueur d'onde (DM), qui permettent de séparer et de rassembler les valeurs de longueur d'onde d'une radiation de signal (SG) et de ladite radiation de contrôle (SV) et ledit dispositif de multiplexage en longueur d'onde (DM) sépare ladite radiation de signal (SG) de ladite radiation de contrôle (SV), de telle manière que la radiation de signal (SG) passe à travers ledit module de branchement (MD), alors que la radiation de contrôle (SV) dérive ledit module ; ladite radiation de signal (SG) et ladite radiation de contrôle (SV) sont recombinées au niveau d'une première unité de sortie (UD1) dudit module de branchement (MD).

2. Système selon la revendication 1, **caractérisé en ce que** ledit instrument de mesure (OTDR) comprend un réflectomètre optique à émission de longueur d'onde unique, dans lequel ladite valeur de longueur d'onde est comprise dans une fenêtre spectrale utilisée pour la transmission de ladite radiation de contrôle (SV).

3. Système selon la revendication 1, **caractérisé en ce que** ledit module de branchement (MD) peut comprendre au moins un composant de raccordement (TR) qui revêt l'objet d'éliminer la radiation de contrôle résiduelle (SV) et/ou d'identifier l'extrémité de la connexion.

4. Système selon la revendication 1, **caractérisé en ce que** ladite radiation de contrôle (SV), provenant d'une deuxième unité de sortie (UD3) dudit module de branchement (MD), est séparée de ladite radiation de signal (SG) et est recombinée dans la direction opposée par ledit dispositif de multiplexage (DM) positionné à proximité d'une troisième unité de sortie (UD4) dudit module de branchement (MD).

5. Système selon la revendication 1, **caractérisé en ce que** ledit module de recyclage (ML) comprend une pluralité de dispositifs de multiplexage en longueur d'onde (DM) reliés de telle manière que ladite radiation de contrôle (SV), provenant d'une première unité de sortie (I1) dudit module de recyclage (ML), est déviée et dirigée, dans la direction opposée, vers une deuxième unité de sortie (I3), alors que ladite radiation de contrôle (SV), provenant d'une troisième unité de sortie (I2) du module de recyclage (ML), est extraite et injectée, dans la direction opposée, au niveau d'une quatrième unité de sortie (I4).

6. Système selon la revendication 5, **caractérisé** en qu'une radiation du signal de transmission (SG) n'est pas influencée par ledit module de recyclage (ML) et continue, non perturbée, son chemin depuis ou vers lesdits terminaux distants (U, U1-U4).

7. Système selon les revendications 1 et 2, **caractérisé en ce que** ledit réflectomètre (OTDR) est lié à un dispositif de sélection (SW), qui relie ledit réflectomètre à une des fibres optiques du réseau principal (RP), ladite fibre optique est reliée à un dispositif de transmission (TOL) dudit terminal principal (OLT).

8. Système selon les revendications 1 ou 2, **caractérisé en ce que** ledit contrôle est réalisé à l'aide de composants de réseaux entièrement passifs.
